# EUROPÄISCHE PATENTANMELDUNG

(11) **EP 1 792 538 A1**
(43) Veröffentlichungstag der Anmeldung: **06.06.2007**
(21) Anmeldenummer: 06400033.4
(22) Anmeldetag: 03.11.2006
(51) Int. Cl.: A01L 5/00, A01L 7/02

(54) **Hufplatte**

(30) Priorität: 02.12.2005 DE 102005057783
(71) Anmelder: Puhl, Michael, 66679 Losheim am See (DE)
(72) Erfinder: Puhl, Michael, 66679 Losheim am See (DE)

(57) **Zusammenfassung**

Die Erfindung betrifft eine Hufplatte, insbesondere aus einem weichen Material, zum orthopädischen Hufbeschlag, mit einer dem Huf zugewandten Plattenfläche (19) und einer dem Huf abgewandten Plattenfläche (20). Gemäß der Erfindung ist in der dem Huf zugewandten Plattenfläche (19) eine Vertiefung (4) für die Aufnahme des Hufstrahls gebildet. Vorzugsweise weist die dem Huf abgewandte Plattenfläche 20 einen zu der Vertiefung komplementären Vorsprung (13) auf.

## Beschreibung

Die Erfindung betrifft eine Hufplatte, insbesondere aus einem weichen Material, zum orthopädischen Hufbeschlag, mit einer dem Huf zugewandten Plattenfläche und einer dem Huf abgewandten Plattenfläche.

Solche, ggf. leicht keilförmige Hufplatten zur Anordnung zwischen Huf und Hufeisen, die aus Gummi bestehen, sind durch Benutzung bekannt. Sie dienen insbesondere dem Schutz von Hufsohle und Hufstrahl, der Höherstellung des Hufs oder der Korrektur der Hufachse und werden sowohl zur Therapie als auch prophylaktisch eingesetzt.

Der Erfindung liegt die Aufgabe zugrunde, die orthopädische Behandlung von Huftieren, insbesondere Pferden, durch Verwendung solcher Hufplatten zu verbessern.

Die diese Aufgabe lösende Hufplatte nach der Erfindung ist dadurch gekennzeichnet, dass in der dem Huf zugewandten Plattenfläche eine Vertiefung für die Aufnahme des Hufstrahls gebildet ist.

Vorteilhaft werden Quetschungen des Hufstrahls vermieden, wie sie bei herkömmlichen Hufplatten vor allem dann auftreten, wenn der Hufstrahl nach einer Trachtenkürzung über den Hornrand des Hufs hinaus vorsteht.

Entsprechend der Anordnung des Hufstrahls ist die Vertiefung in einer bevorzugten Ausführungsform der Erfindung angrenzend an den hinteren Rand der Hufplatte angeordnet.

Zweckmäßig ist die Vertiefung symmetrisch zu einer von vorn nach hinten verlaufenden Achse, bei der es sich vorzugsweise um die Mittelachse der Hufplatte handelt, ausgebildet.

Zweckmäßig ist in weiterer Anpassung an die Anatomie des Hufstrahls der Rand der Vertiefung etwa in Form eines spitzen gleichschenkeligen Dreiecks ausgebildet, dessen Spitze zum vorderen Rand der Hufplatte weist. Vorzugsweise nimmt die Tiefe zur Dreieckspitze hin stetig ab und die Vertiefung läuft an der Dreieckspitze in der Plattenfläche aus, d.h. sie geht ohne Kante in die Plattenfläche über.

Die an den hinteren Rand der Hufplatte angrenzende Seite der Vertiefung ist in Anpassung an die Hufanatomie nach außen gewölbt. Diese Seite ist kürzer als die beiden gleichlangen Dreieckseiten.

Als zweckmäßig für viele Anwendungsfälle hat es sich erwiesen, wenn die Dreieckspitze der Vertiefung über die Plattenmitte hinausreicht und sich insbesondere vom hinteren Rand an nach vorn über etwa 2/3 der Plattenlänge erstreckt.

Vorzugsweise weist der Boden der Vertiefung im Querschnitt senkrecht zur Mittelachse eine Wellenform auf, wobei der Boden von einer Bodenerhöhung in der Mitte der Vertiefung zunächst nach beiden Seiten hin abfällt und dann wieder bis zum jeweiligen Rand der Vertiefung hin ansteigt.

An den gleichlangen Dreieckseiten der Vertiefung können stufenartige Ausnehmungen gebildet sein, welche eine zwischen Platte und Huf eingebrachte Hufpolsterfüllung stabilisieren und fixieren können. Der Stabilisierung und Fixierung einer Hufpolsterfüllungen dienen ferner sich innerhalb der Vertiefung zur Mittelachse senkrecht erstreckende Querstege, welche insbesondere innerhalb des letzten, an den hinteren Rand der Platte angrenzenden Drittels der Vertiefung angeordnet sind.

Zweckmäßig ist die Höhe der Querstege halb so groß wie die jeweilige Tiefe der Vertiefung an der Stelle des Steges.

In weiterer Ausgestaltung der Erfindung weist die dem Huf abgewandte Plattenfläche einen Vorsprung auf, welcher im Bereich des Hufstrahls für Bodenkontakt und damit für eine optimale Abstützung des Hufes am Boden sorgt.

Vorzugsweise ist der Vorsprung komplementär zu der Vertiefung gebildet, d.h. er liegt der Vertiefung auf der anderen Plattenseite genau gegenüber. Form und Abmessungen entsprechen dem Boden der Vertiefung.

Die Plattenflächen können zueinander parallel oder geneigt sein. Im letzteren Fall nimmt die Plattendicke vom hinteren Rand an zum vorderen Rand hin ab.

Insbesondere bei einer keilförmigen Hufplatte ist zweckmäßig in ihrer dem Huf abgewandten Plattenfläche eine herzförmige Vertiefung symmetrisch zur Mittelachse gebildet, in welche hinein sich die Spitze des genannten Vorsprungs erstreckt, wobei die Herzspitze in die gleiche Richtung wie die Spitze des Vorsprungs weist. Vorzugsweise nimmt die Tiefe von hinten nach vorn stetig ab und die herzförmige Vertiefung geht an der Herzspitze ohne Kante in die ebene Plattenfläche über.

In weiterer Ausgestaltung der Erfindung kann die dem Huf zugewandte Plattenfläche wenigstens in einem vorderen Abschnitt strukturiert sein, wobei diese Strukturierung den Reibungswiderstand zwischen Platte und Huf erhöht und Verschiebungen der Platte auf dem Huf entgegenwirkt.

Zweckmäßig ist die Hufplatte etwa quadratisch mit abgerundeten Ecken ausgebildet.

Die Erfindung wird nachfolgend anhand von Ausführungsbeispielen und der beiliegenden, sich auf diese Ausführungsbeispiele beziehenden Zeichnungen näher erläutert. Es zeigen:
- Fig. 1: eine erfindungsgemäße Hufplatte in einer Ansicht schräg von oben auf die dem Huf zugewandten Plattenseite,
- Fig. 2: die Hufplatte von Fig. 1 in einer Ansicht schräg von unten auf die dem Huf abgewandte Plattenseite,
- Fig. 3: eine Teilansicht der Hufplatte von Fig. 1 und 2 in einer Draufsicht auf den hinteren Teil der dem Huf zugewandten Plattenseite, und
- Fig. 4: ein zweites Ausführungsbeispiel für eine Hufplatte nach der Erfindung in einer Ansicht schräg von unten auf die dem Huf abgewandte Plattenseite.

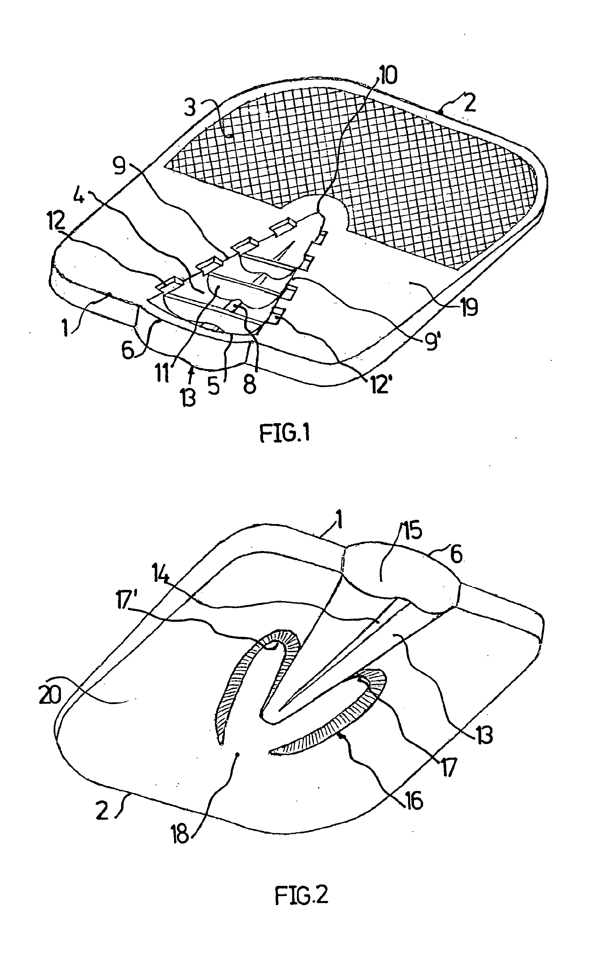

Eine in Fig. 1 und 2 gezeigte, etwa quadratische Hufplatte, z.B. aus Gummi, mit abgerundeten Ecken weist im wesentlichen eine Keilform auf, wobei die Plattendicke vom hinteren Plattenrand 1 zum vorderen Plattenrand 2 hin abnimmt.

In den vorderen Teil einer dem Huf zugewandten Plattenfläche 19 ist als Oberflächenstrukturierung ein schuppenartiges Muster 3 eingeprägt.

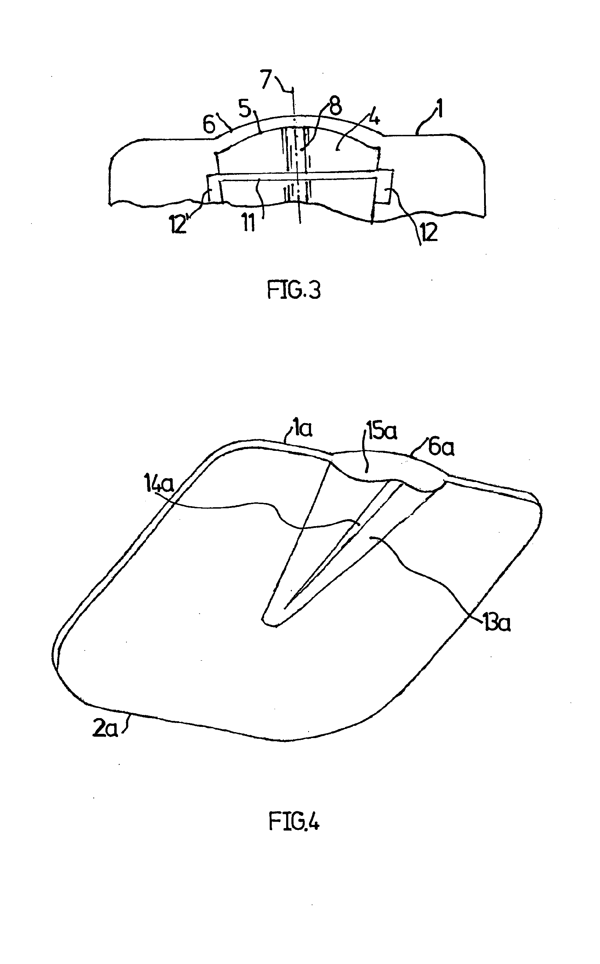

Die zu einer von vorn nach hinten verlaufenden, in Fig. 3 dargestellten Mittelachse 7 symmetrische Hufplatte weist auf der dem Huf zugewandten Seite eine Vertiefung 4 mit einem Öffnungsrand etwa in der Form eines gleichschenkeligen Dreiecks auf. Eine kurze, leicht konvex gebogene Dreieckseite 5 grenzt an einen nach außen als Kreissegment hervortretenden Abschnitt 6 des hinteren Plattenrands 1 an.

Wie Fig. 1 erkennen lässt, weist der Boden der Vertiefung 4 in zur Mittelachse 7 senkrechten Querschnitten eine Wellenform auf. Von einer sich in der Mitte der Vertiefung 4 von vorn nach hinten erstreckenden Bodenerhöhung 8 fällt der Boden zunächst nach beiden Seiten hin ab und steigt dann bis zu der langen Dreieckseite 9 bzw. 9' der Vertiefung 4 hin wieder an.

Zum vorderen Ende hin wird die Vertiefung 4 stetig flacher und geht an der Dreieckspitze 10 in die ebene Oberfläche der dem Huf zugewandten Plattenseite über.

Innerhalb der Vertiefung sind ferner drei, zur Mittelachse 7 senkrechte Querstege 11 angeordnet, die mit dem Boden der Vertiefung 4 verbunden sind. Die Höhen der Stege entsprechen in dem gezeigten Ausführungsbeispiel etwa der Hälfte der jeweiligen maximalen Tiefe der Vertiefung 4.

Wie Fig. 1 ferner zeigt, sind an den langen Dreieckseiten 9 und 9' des Öffnungsrandes der Vertiefung 4 jeweils vier Stufenausnehmungen 12 bzw. 12' gebildet. Der Boden der Stufenausnehmungen 12 und 12' schließt bündig mit dem freien Rand der angrenzenden Querstege 11 ab.

Der Vertiefung 4 auf der dem Huf zugewandten Plattenfläche 19 der Hufplatte entspricht ein Vorsprung 13 auf ihrer dem Huf abgewandten Plattenfläche 20. Entsprechend bilden die Randbegrenzungen des Vorsprungs 13 etwa ein gleichschenkeliges Dreieck und der Vorsprung weist in der Mitte eine sich entlang der Mittelachse 7 etwa über die gesamte Länge des Vorsprungs 13 erstreckende muldenartige Vertiefung 14 auf.

Das hintere Ende des Vorsprungs 13 wird durch eine Fläche 15 begrenzt, die entsprechend der Biegung des Plattenrandabschnittes 6 konvex gewölbt ist und etwa senkrecht auf den Plattenflächen 19 und 20 steht.

Das spitze vordere Ende des Vorsprungs 13 erstreckt sich in einer etwa herzförmige Vertiefung 16 hinein, deren tiefste Stelle bei 17 bzw. 17' liegt. Nach vorn wird die Vertiefung stetig flacher und geht bei 18 ohne Kante in die ebene, dem Huf abgewandten Plattenfläche 20 über.

Vorteilhaft bietet die Vertiefung 4 Raum für die Aufnahme des Hufstrahls. So kommt es, insbesondere bei der Anbringung der Platte am Huf nach einer Trachtenkürzung, im Hufstrahlbereich nicht zu Quetschungen. Die Form der Vertiefung ist einschließlich ihrer Auswölbung an ihrem hinteren Ende an die Form des Hufstrahls angepasst.

Die Querstege 9 fixieren und stabilisieren die zwischen Huf und Platte einzubringende Hufpolsterfüllung. Dem gleichen Zweck dienen die Ausnehmungen 12 und 12'.

Der Vorsprung 13 sichert vorteilhaft einen Kontakt des Hufs mit dem Boden im Hufstrahlbereich und sorgt damit für eine Entlastung gleichmäßigere Druckverteilung und des Hufs.

Abweichend von dem gezeigten Ausführungsbeispiel könnte die Dreieckspitze 10 näher an den vorderen Rand 2 heranreichen und sich die Vertiefung 4 z.B. über 2/3 der Plattenlänge erstrecken.

## Patentansprüche

1. Hufplatte, insbesondere aus einem weichen Material, zum orthopädischen Hufbeschlag, mit einer dem Huf zugewandten Plattenfläche (19) und einer dem Huf abgewandten Plattenfläche (20),
**dadurch gekennzeichnet,**
**dass** in der dem Huf zugewandten Plattenfläche (19) eine Vertiefung (4) für die Aufnahme des Hufstrahls gebildet ist.

2. Hufplatte nach Anspruch 1,
**dadurch gekennzeichnet,**
**dass** die Vertiefung (4) angrenzend an einen hinteren Rand (1) der Hufplatte angeordnet ist.

3. Hufplatte nach Anspruch 1 oder 2,
**dadurch gekennzeichnet,**
**dass** die Vertiefung (4) symmetrisch zu einer von hinten nach vorn verlaufenen Achse, insbesondere Mittelachse (7) der Hufplatte, ausgebildet ist.

4. Hufplatte nach einem der Ansprüche 1 bis 3,
**dadurch gekennzeichnet,**
**dass** der Rand der Vertiefung (4) etwa die Form eines spitzen gleichschenkeligen Dreiecks aufweist, dessen Spitze zum vorderen Rand (2) der Hufplatte weist und dessen an den hinteren Rand (1) angrenzende Seite (5) kürzer als die beiden gleichlangen Seiten (9,9') des gleichschenkeligen Dreiecks ist.

5. Hufplatte nach einem der Ansprüche 2 bis 4,
**dadurch gekennzeichnet,**
**dass** die an den hinteren Rand (1) der Hufplatte angrenzende Seite (5) der Vertiefung (4) nach außen gewölbt ist.

6. Hufplatte nach einem der Ansprüche 1 bis 5,
**dadurch gekennzeichnet,**
**dass** die Tiefe der Vertiefung (4) von hinten nach vorn stetig abnimmt und die Vertiefung (4) am vorderen Ende (10) ohne Kante in die Plattenfläche (19) übergeht.

7. Hufplatte nach einem der Ansprüche 4 bis 6,
**dadurch gekennzeichnet,**
**dass** die Dreieckspitze (10) der Vertiefung (4) über die Plattenmitte hinausreicht und sich insbesondere die Vertiefung (4) vom hinteren Rand (1) an nach vorn über 2/3 der Plattenlänge erstreckt.

8. Hufplatte nach einem der Ansprüche 3 bis 7,
**dadurch gekennzeichnet,**
**dass** der Boden der Vertiefung (4) im Querschnitt senkrecht zur Mittelachse (7) eine Wellenform aufweist und von einer Bodenerhöhung (8) in der Mitte der Vertiefung (4) zunächst nach beiden Seiten hin abfällt und dann wieder bis zum Rand (9,9') der Vertiefung (4) ansteigt.

9. Hufplatte nach einem der Ansprüche 4 bis 8,
**dadurch gekennzeichnet,**
**dass** an den gleichlangen Dreieckseiten (9,9') der Vertiefung (4) stufenartige Ausnehmungen (12,12') gebildet sind.

10. Hufplatte nach einem der Ansprüche 3 bis 9,
**dadurch gekennzeichnet,**
**dass** in der Vertiefung (4) zur Achse (7) senkrechte Querstege (11) angeordnet sind, insbesondere innerhalb des dem hinteren Rand (1) zugewandten Drittels der Vertiefung (4).

11. Hufplatte nach Anspruch 10,
**dadurch gekennzeichnet,**
**dass** die Höhe der Querstege (11) halb so groß wie die jeweilige Tiefe der Vertiefung (4) ist.

12. Hufplatte nach einem der Ansprüche 1 bis 11,
**dadurch gekennzeichnet,**
**dass** die dem Huf abgewandte Plattenfläche (20) einen Vorsprung (13) aufweist.

13. Hufplatte nach Anspruch 12,
**dadurch gekennzeichnet,**
**dass** der Vorsprung (13) komplementär zu der Vertiefung (4) ausgebildet ist.

14. Hufplatte nach einem der Ansprüche 1 bis 13,
**dadurch gekennzeichnet,**
**dass** die Plattenflächen (19,20) zueinander parallel oder geneigt sind, wobei in letzterem Fall die Plattendicke vom hinteren Rand (1) zum vorderen Rand (2) hin abnimmt.

15. Hufplatte nach Anspruch 14,
**dadurch gekennzeichnet,**
**dass** die Platte in ihrer dem Huf abgewandten Plattenfläche (20) eine herzförmige Vertiefung (16) aufweist, in welche hinein sich die Spitze des Vorsprungs (13) erstreckt, wobei die Herzspitze in die gleiche Richtung wie die Spitze des Vorsprungs (13) weist.

16. Hufplatte nach Anspruch 15,
**dadurch gekennzeichnet,**
**dass** sich die Tiefe der Vertiefung (16) von hinten nach vorn stetig verringert und die Vertiefung (16) in der Herzspitze ohne Kante in die Plattenfläche (20) übergeht.

17. Hufplatte nach einem der Ansprüche 1 bis 16,
**dadurch gekennzeichnet,**
**dass** die dem Huf zugewandte Plattenfläche (19) wenigstens in einem vorderen Abschnitt strukturiert ist.

18. Hufplatte nach einem der Ansprüche 1 bis 17,
**dadurch gekennzeichnet,**
**dass** die Platte etwa quadratisch mit abgerundeten Ecken ausgebildet ist.
